# EUROPÄISCHE PATENTSCHRIFT

(11) **EP 2 069 655 B1**
(45) Veröffentlichungstag und Bekanntmachung des Hinweises auf die Patenterteilung: **14.11.2012**
(21) Anmeldenummer: 07820608.3
(22) Anmeldetag: 26.09.2007
(51) Int. Cl.: F16D 65/18, F16D 65/14

(54) **KOMBINIERTE FAHRZEUGBREMSE MIT ELEKTROMECHANISCH BETÄTIGBARER FESTSTELLBREMSE UND GETRIEBE ZUR UMSETZUNG EINER ROTATIONSBEWEGUNG IN EINE TRANSLATIONSBEWEGUNG**
COMBINED VEHICLE BRAKE WITH ELECTROMECHANICALLY OPERABLE PARKING BRAKE AND GEAR FOR CONVERTING A ROTARY MOVEMENT INTO A TRANSLATIONAL MOVEMENT
FREIN COMBINE POUR VEHICULE PRESENTANT UN FREIN DE STATIONNEMENT ACTIONNABLE DE MANIERE ELECTROMECANIQUE, ET TRANSMISSION POUR LA TRANSFORMATION D'UN MOUVEMENT DE ROTATION EN UN MOUVEMENT DE TRANSLATION

(30) Priorität: 27.09.2006 DE 102006045999; 11.01.2007 DE 102007002446; 12.04.2007 DE 102007017210; 01.08.2007 DE 102007036460; 26.09.2007 DE 102007046180
(43) Veröffentlichungstag der Anmeldung: 17.06.2009
(73) Patentinhaber: Continental Teves AG & Co. OHG, 60488 Frankfurt (DE)
(72) Erfinder: WINKLER, Thomas, 55122 Mainz (DE); BALZ, Jürgen, 65510 Hünstetten-oberlibbach (DE); KOCH, Dirk, 35457 Lollar-odenhausen (DE); SCHUMANN, Marcus, 68535 Edingen-Neckarhausen (DE); KLIMT, Anja, 60488 Frankfurt/m. (DE); BAUER, Jürgen, 65187 Wiesbaden (DE); HINTZ, Torsten, 61184 Karben (DE)
(86) Internationale Anmeldenummer: PCT/EP2007/060213
(87) Internationale Veröffentlichungsnummer: WO 2008/037738

(56) Entgegenhaltungen:
- DE-A1- 19 853 721
- DE-U1- 9 420 384
- FR-A- 2 337 285
- US-A- 4 850 457

## Beschreibung

Die vorliegende Erfindung betrifft eine kombinierte Fahrzeugbremse, die eine hydraulisch betätigbare Betriebsbremse und eine elektromechanisch betätigbare Feststellbremsvorrichtung aufweist, wobei in einem Bremsgehäuse ein hydraulischer Betriebsdruckraum von einem Bremskolben begrenzt ist, der zur Durchführung von Betriebsbremsungen mit hydraulischem Druckmittel beaufschlagbar ist, so dass der Bremskolben zur Erzielung einer Bremswirkung entlang einer Kolbenlängsachse betätigbar ist, und wobei die Feststellbremsvorrichtung auf den Bremskolben mittels eines Getriebes wirkt, indem das Getriebe die Rotationsbewegung eines elektromechanischen Aktuators in eine Translationsbewegung umsetzt und eine Betätigung des Bremskolbens zur Durchführung von Feststellbremsvorgängen bewirkt und in der betätigten Stellung hält, wobei das Getriebe eine Gewindespindel und eine Gewindemutter aufweist, die über mehrere Wälzkörper miteinander in Kontakt stehen. Außerdem betrifft die vorliegende Erfindung ein Getriebe zur Umsetzung einer Rotationsbewegung in eine Translationsbewegung mit einer Gewindespindel und einer Gewindemutter, die über mehrere Wälzkörper miteinander in Kontakt stehen.

Eine derartige hydraulische Fahrzeugbremse mit elektrisch betätigbarer Feststellbremsvorrichtung ist beispielsweise aus der DE 101 50 803 B4 bekannt. Bei der vorbekannten Fahrzeugbremse ist ein Getriebe vorgesehen, das nach dem Wirkprinzip einer Gewindemutter-Spindel-Anordnung die Drehbewegung des Elektromotors in eine Längsbewegung des Bremskolbens zur Erzielung einer Feststellkraft umsetzt. Gemäß einem Ausführungsbeispiel ist diese Getriebeeinheit als sogenannte "Spindel-/Kugelumlaufbüchsenanordnung" ausgebildet, die auch Kugelgewindetrieb oder Kugelumlaufspindel genannt wird. Diese Kugelgewindetriebe weisen eine Gewindespindel und eine Gewindemutter auf, die über mehrere Wälzkörper miteinander in Kontakt stehen. Zur Rückführung der als Kugeln ausgeführten Wälzkörper ist stets ein Kugelkanal vorgesehen, wie es beispielsweise in der DE 10 2004 038 951 A1 offenbart ist. Dieser Kugelkanal ist aufwändig herzustellen und dadurch ist die Herstellung eines vorbekannten Kugelgewindetriebes verhältnismäßig teuer.

Die DE 198 53 721 bezieht sich auf eine kombinierte Fahrzeugbremse gemäß dem Oberbegriff des Anspruchs 1.

Die FR 2 337 285 A bezieht sich auf eine Betätigungsmechanik mit einer Getriebe gemäß dem Oberbegriff des Anspruchs 15 wobei ein Kugelgewindetrieb vorgesehen ist, dessen Gewindemutter einen schraubenförmigen Kanal zur Aufnahme von Kugeln aufweist, und wobei an den Enden des Kanals Verschlußmittel vorgesehen sind. Dabei ist zwischen benachbarten Kugeln eine Schraubenfeder eingefügt.

Der vorliegenden Erfindung liegt daher die Aufgabe zugrunde, eine kombinierte Fahrzeugbremse der eingangs genannten Gattung dahingehend zu verbessern, dass das Getriebe der elektromechanisch betätigbaren Feststellbremse kostengünstig herstellbar ist und gleichzeitig einen hohen Wirkungsgrad aufweist, um die elektrische Leistungsaufnahme zur Durchführung von Feststellbremsvorgängen zu verringern. Außerdem liegt der vorliegenden Erfindung die Aufgabe zugrunde, ein derartiges Getriebe darzustellen.

Diese Aufgabe wird erfindungsgemäß durch eine Vorrichtung mit den Merkmalen des Anspruchs 1 gelöst. Mit anderen Worten ist durch die vorliegende Erfindung eine Nachstellvorrichtung und eine Betätigungsvorrichtung in einem einzige Bauteil vereinigt, das mit vergleichsweise wenig Bauteilen dargestellt wird. Gleichzeitig ist der Gesamtwirkungsgrad vergleichsweise groß, was eine reduzierte elektrische Leistungsaufnahme und kurze Aktivierungs- und Deaktivierungs-Zeiten der Feststellbremse zur Folge hat.

Weitere vorteilhafte Ausgestaltungen sind den abhängigen Unteransprüchen entnehmbar. So ist in einer besonders vorteilhaften Weiterbildung des Erfindungsgegenstandes ein zweites Federelement vorgesehen, das zwischen den Wälzkörpern und dem anderen Anschlag angeordnet ist. Das zweite Federelement dient als Puffer beim Lösen der Feststellbremse. Dieser Puffer kommt dann zum Einsatz, wenn vor der Betätigung der Feststellbremse ein hoher hydraulischer Bremsdruck in der hydraulischen Betriebsbremse aufgebaut wurde. In diesem Falle ist der Rollweg der Kugeln beim Lösen größer als bei der Betätigung, weshalb ein zweiter "Pufferweg" in der entgegen gesetzten Richtung vorteilhaft ist.

Bei einer vorteilhaften Ausführungsform sind die Anschläge kraftschlüssig mit der Gewindemutter verbunden oder einteilig mit der Gewindemutter ausgebildet.

Die Anschläge werden durch Stifte gebildet, die sich an der Gewindemutter abstützen. Dabei sind die Stifte in Bohrungen in der Gewindemutter eingepresst und ragen in den Gewindegang der Gewindemutter.

Bei einer alternativen Ausführungsform werden die Anschläge durch zwei spiralsegmentförmig Verschlusselemente gebildet, deren Durchmesser vor der Montage größer als der Durchmesser des Gewindeganges ist. Nach erfolgter Montage sind die spiralsegmentförmigen Verschlusselemente infolge einer elastischen Verformung kraftschlüssig in der Gewindemutter positioniert.

Bei einer besonders bevorzugten Ausführungsform des Erfindungsgegenstandes ist vorgesehen, dass ein mechanischer Energiespeicher vorgesehen ist, der beim Betätigen der Gewindespindel ladbar ist. Dabei ist der mechanische Energiespeicher durch einen Drehstab gebildet, der von einer axialen Bohrung der Gewindespindel aufgenommen ist und an einem dem Antrieb abgewandten Ende der Gewindespindel form- und/oder kraftschlüssig mit der Gewindespindel verbunden ist. Der Querschnitt des Drehstabes ist rund oder rechteckig.

Bei einer besonders vorteilhaften Weiterbildung des Erfindungsgegenstandes ist vorgesehen, dass ein Kragen der Gewindespindel von einer Stufenbohrung im Bremsgehäuse aufgenommen wird und über ein erstes Axiallager am Bremsgehäuse abstützt, während ein zweites Axiallager zwischen dem Kragen und einem mit dem Bremsgehäuse verbundenen Topf angeordnet ist und eine Bewegung der Gewindespindel entlang der Kolbenlängsachse unterdrückt. Vorteilhaft ist dabei der Topf in die Stufenbohrung des Bremsgehäuses eingepresst und bildet einen Anschlag für die Gewindemutter.

Bei einer vorteilhaften Weiterbildung des Erfindungsgegenstandes ist die Gewindemutter derart in den Bremskolben eingepasst ist, dass eine Relativbewegung zwischen Gewindemutter und Bremskolben eine Reibkraft erzeugt. Alternativ oder zusätzlich ist ein Dichtring zwischen Bremskolben und Bremsgehäuse vorgesehen, der bei einer Relativbewegung zwischen Bremskolben und Bremsgehäuse eine Reibkraft erzeugt.

Die der Erfindung zugrunde liegende Aufgabe wird auch durch ein Getriebe mit den Merkmalen des Anspruchs 15 gelöst. Durch diese Maßnahme wird ein Wälzweg zum Abrollen der Wälzkörper vorgehalten und somit kann auf eine Rückführung der Wälzkörper verzichtet werden.

Weitere vorteilhafte Ausgestaltungen sind den abhängigen Unteransprüchen 16 bis 20 entnehmbar.

Die Erfindung wird nachfolgend anhand zweier Ausführungsbeispiele im Zusammenhang mit der beiliegenden Zeichnung näher erläutert. In der Zeichnung zeigen:
- Fig. 1: eine Schnittdarstellung der erfindungsgemäßen Feststellbremse;
- Fig. 2: eine dreidimensionale Ansicht der in Fig. 1 dargestellten Fahrzeugbremse;
- Fig. 3: eine erste Ausführung des erfindgemäßen Getriebes das in eine Fahrzeugbremse nach Fig. 1 und 2 einsetzbar ist und integrierte Anschläge für das Federelement aufweist;
- Fig. 4: eine zweite Ausführung des erfindungsgemäßen Getriebes;
- Fig. 5a: bis d verschiedene Teil-Darstellungen des Getriebes nach Fig. 3 mit einer weiteren Ausführung der Anschläge für das Federelement;
- Fig. 6: eine Schnittdarstellung mit einer alternativen Ausführung der Anschläge für das Federelement;
- Fig. 7: einen Ausschnitt aus Fig. 1;
- Fig. 8: ein zeitliches Ablaufdiagramm beim Zuspannen und Lösen der Feststellbremse;
- Fig. 9: ein Diagramm, das die Zuspannkraft und das Antriebsmoment des elektromechanischen Aktuators beim Zuspannen und Lösen der Feststellbremse gegenüberstellt;
- Fig. 10a, b: das Getriebe nach Fig. 3 und 4 mit integriertem mechanischen Energiespeicher;
- Fig. 11a, b: Querschnitte entlang der in Fig. 9b dargestellten Schnittebenen;
- Fig. 12: ein Getriebe nach Fig. 3 und 4, das in einen Bremskolben eingepasst ist und
- Fig. 13: ein Zeitdiagramm der Stromaufnahme des elektromechanischen Aktuators beim Lösen der Feststellbremse.

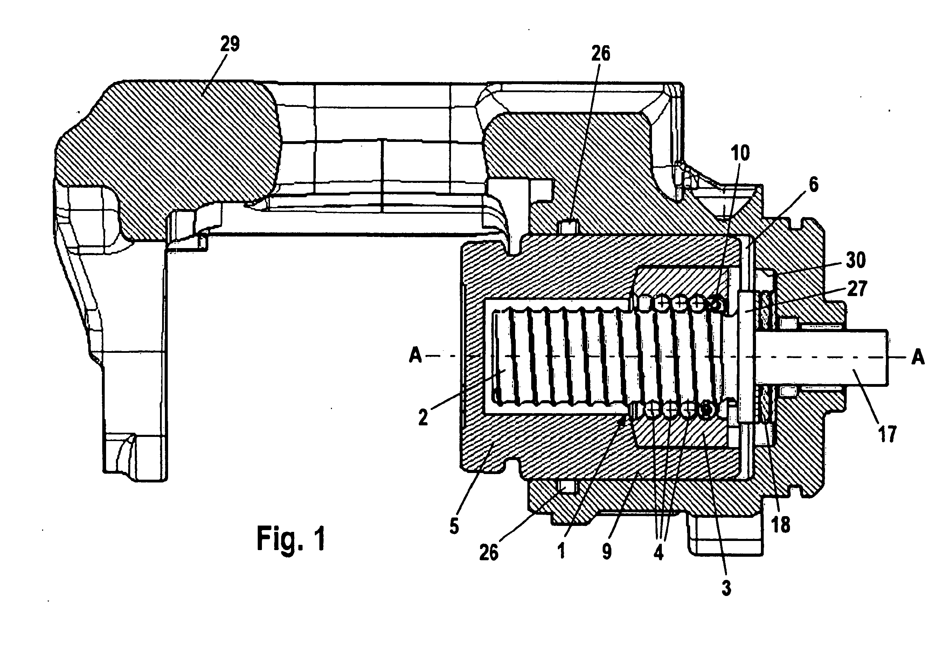

Die in Fig. 1 dargestellte erfindungsgemäße Fahrzeugbremse weist einerseits eine hydraulisch betätigbare Betriebsbremse und andererseits eine elektromechanisch betätigbare Feststellbremsvorrichtung auf. Die Fahrzeugbremse weist ein Bremsgehäuse 29 auf, welches den äußeren Rand einer nicht dargestellten Bremsscheibe und zwei ebenfalls nicht dargestellte Bremsbeläge umgreift. Das Bremsgehäuse 29 bildet auf seiner Innenseite einen Bremszylinder 9, der einen Bremskolben 5 axial verschiebbar aufnimmt. In den zwischen Bremszylinder 9 und Bremskolben 5 gebildeten Betriebsdruckraum 6 kann zur Durchführung von Betriebsbremsungen Bremsflüssigkeit zugeführt werden, so dass sich ein Bremsdruck aufbaut, der den Bremskolben 5 axial entlang einer Kolbenlängsachse A zur Bremsscheibe hin verschiebt. Dadurch wird der dem Bremskolben 5 zugewandte Bremsbelag gegen die Bremsscheibe gedrückt, wobei sich als Reaktion das Bremsgehäuse 29 in der entgegen gesetzten Richtung verschiebt und dadurch auch den anderen Bremsbelag gegen die Bremsscheibe drückt.

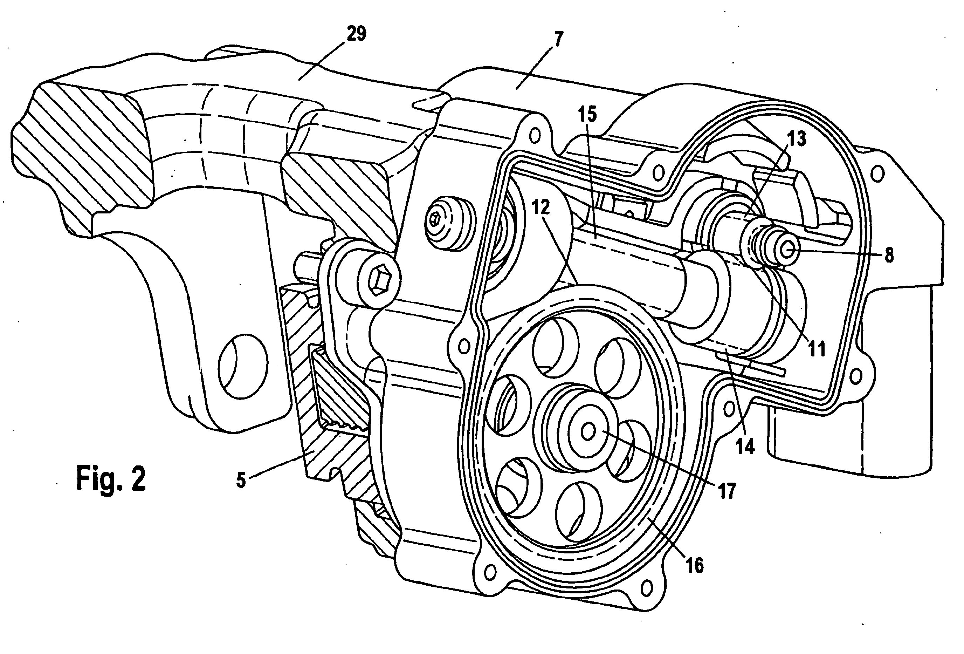

Eine Feststellbremsvorrichtung zur Durchführung von Feststellbremsvorgängen ist elektromechanisch betätigbar und wirkt ebenfalls auf den Bremskolben 5. Dazu ist ein Getriebe 1 vorgesehen, das die Rotationsbewegung eines elektromechanischen Aktuators7 in eine Translationsbewegung umsetzt und eine Betätigung des Bremskolbens 5 entlang der Achse A bewirkt. Das Getriebe 1 wird im Wesentlichen durch eine Gewindespindel 2 und eine Gewindemutter 3 gebildet, die über Wälzkörper 4 miteinander in Verbindung stehen. Die Wälzkörper 4 sind als Kugeln 4 ausgebildet. Ein mit der Gewindespindel 2 verbundener Schaft 17 ragt an der der Bremsscheibe abgewandten Seite aus dem Bremsgehäuse 29 heraus und wird unter Zwischenschaltung eines zweistufigen Untersetzungsgetriebes von einem elektromechanischen Aktuator 7 angetrieben, wie nachfolgend anhand von Fig. 2 noch näher erläutert wird. Die auf die Gewindespindel 2 übertragene Rotationsbewegung wird über die Kugeln 4, die sich im Gewindegang zwischen Gewindespindel 2 und Gewindemutter 3 befinden, auf die Gewindemutter 3 übertragen, die eine Translationsbewegung in Richtung der Achse A vollzieht. Dadurch wird auch der Bremskolben 5 betätigt, an dem sich die Gewindemutter 3 abstützt. Gleichzeitig stützt sich die Gewindespindel 2 über einen mit der Spindel 2 verbundenen Kragen 27 und ein erstes Axiallager 18 am Bremsgehäuse 29 ab. Das Getriebe 1 setzt also die Drehbewegung des elektromechanischen Aktuators 7 in eine Linearbewegung um und ist für die Generierung der Zuspannkraft zur Durchführung eines Feststellbremsvorganges verantwortlich.

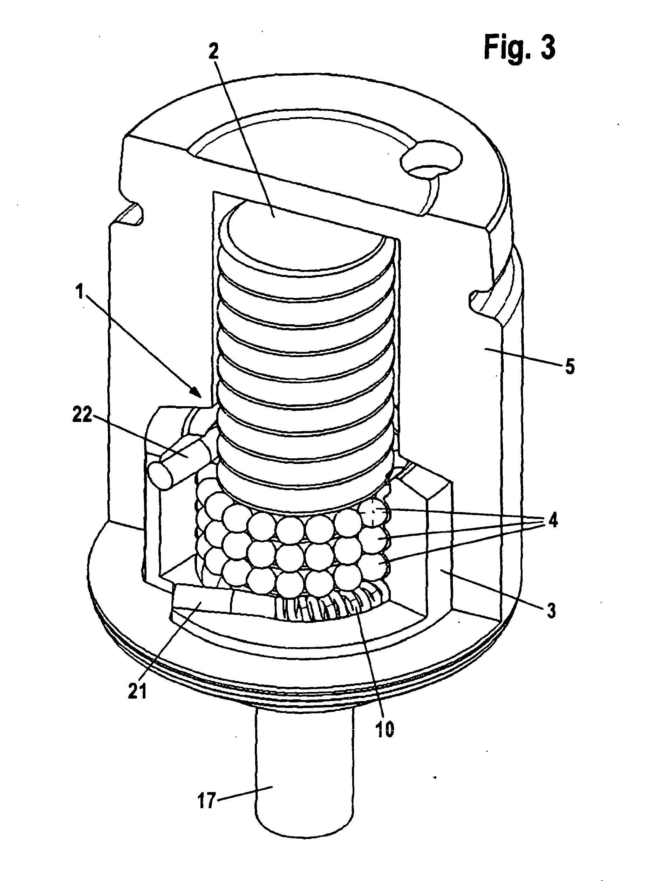

Bei einer Betätigung des Getriebes 1 unter Last rollen die Wälzkörper 4 im Gewindegang ab. Dadurch wird ein verhältnismäßig großer Wirkungsgrad von 75% bis 90% erreicht. Bei einem lastfreien Betätigen des Getriebes 1 rutschen die Wälzkörper 4 dagegen, d.h. bis der dem Bremskolben 5 zugeordnete Bremsbelag an der nicht dargestellten Bremsscheibe anliegt rutschen die Kugeln 4, weil es sich hierbei um eine nahezu lastfreie Betätigung handelt. Erst unter Last beginnen die Kugeln 4 zu wälzen bzw. abzurollen. Das Getriebe 1 wirkt also gleichzeitig als Nachstellung falls die nicht dargestellten Bremsbeläge verschlissen sind. Der Verzicht auf eine separate Nachstelleinrichtung bzw. die Integration von Nachstelleinrichtung und Betätigungseinrichtung in ein einziges Bauteil ist besonders kostengünstig und gleichzeitig robust. Damit das Abrollen der Wälzkörper 4 unter Last und das Rutschen bei lastfreier Betätigung des Getriebes 1 stets möglich ist, ist ein Federelement 10 vorgesehen, das einen Wälzweg zum Abrollen der Wälzkörper vorhält, wie nachfolgend anhand von Fig. 3 näher erläutert wird.

Die erfindungsgemäße Fahrzeugbremse ist in Fig. 2 in dreidimensionaler Ansicht dargestellt. Wie ersichtlich ist, ist zwischen dem elektromechanischen Aktuator 7 ein zweistufiges Untersetzungsgetriebe zwischengeschaltet. In der in Fig. 2 dargestellten Ausführungsform ist das zweistufige Getriebe als zweistufiges Schneckengetriebe 11, 12 ausgebildet. Schneckengetriebe sind eine Kategorie der Schraubwälzgetriebe, bei denen im Gegensatz zu den Wälzgetrieben auch ein Gleitanteil in der Bewegung vorhanden ist. Aufgebaut ist ein solches Schneckengetriebe aus einem schraubenförmig verzahnten Rad, der Schnecke, und einem darin kämmenden schrägverzahnten Rad, dem Schneckenrad. Die erste Getriebestufe, das heißt das erste Schneckengetriebe 11, ist eingangsseitig mit der Ausgangswelle 8 des elektromechanischen Aktuators 7 verbunden, während die zweite Getriebestufe, das heißt das zweite Schneckengetriebe 12, ausgangsseitig mit dem Schaft 17 bzw. mit dem Getriebe 1 verbunden ist. Wie es in Fig. 2 dargestellt ist, ist eine erste Schnecke 13 auf die Ausgangswelle 8 des elektromechanischen Aktuators 7 aufgesteckt und kämmt ein erstes Schneckenrad 14. Eine zweite Schnecke 15 ist auf das Drehzentrum des ersten Schneckenrades 14 aufgesteckt und wird von diesem in Rotation versetzt. Diese zweite Schnecke 15 wiederum kämmt ein zweites Schneckenrad 16, das drehfest mit dem Schaft 17 verbunden ist und den Schaft 17 gemeinsam mit der Gewindespindel 2 in Rotation versetzt und dabei eine Translationsbewegung der Gewindemutter 3 erzeugt, wie bereits beschrieben wurde. Damit die auf diese Weise eingestellte Zuspannkraft während eines Feststellbremsvorganges erhalten bleibt, muss ein Schneckengetriebe selbsthemmend ausgeführt werden. In der vorliegenden Ausführungsform weist das erste Schneckengetriebe 11 einen Wirkungsgrad von 75% auf, während das zweite Schneckengetriebe mit einem Wirkungsgrad von 40 % selbsthemmend ausgeführt ist. Der Summenwirkungsgrad liegt damit bei 30%. Die Gesamtuntersetzung des zweistufigen Untersetzungsgetriebes 11, 12 in Kombination mit dem Getriebe 1 zur Betätigung des Bremskolbens 5 liegt in der Größenordnung von 350:1. Gleichzeitig wird eine geringe axiale Baulänge der Fahrzeugbremse erzielt.

In Fig. 3 ist eine erste Ausführungsform des Getriebes 1 dargestellt. Fig. 3 zeigt, dass die Kugeln 4 im Gewindegang zwischen Gewindespindel 2 und Gewindemutter 3 begrenzt beweglich zwischen zwei Anschlägen 21, 22 angeordnet sind. Zwischen dem ersten Anschlag 21 und den Kugeln 4 ist ein Federelement 10 vorgesehen, das bei einem lastfreien Betätigen des Getriebes 1 ein Rutschen der Kugeln 4 und bei einem Betätigen des Getriebes 1 unter Last ein Abrollen der Kugeln 4 ermöglicht, da das Federelement 10 als Puffer wirkt und einen Abrollweg oder Wälzweg für die Kugeln vorhält. Die Anschläge 21, 22 sind kraftschlüssig mit der Gewindemutter verbunden. Alternativ können sie auch einteilig mit der Gewindemutter 3 ausgebildet sein.

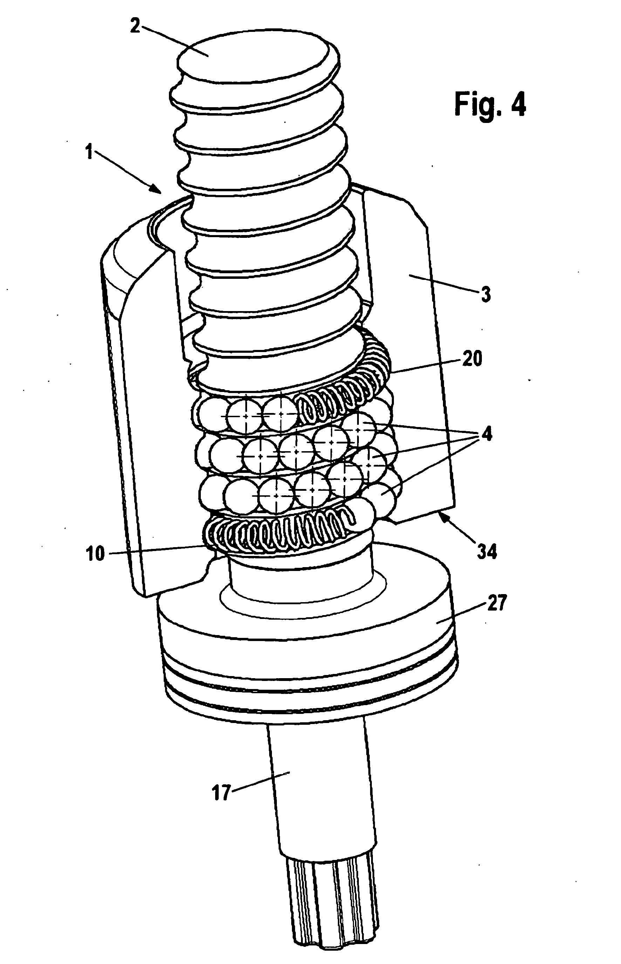

Die in Fig. 4 dargestellte zweite Ausführungsform des Getriebes 1 weist eine zweite Feder 20 auf, die zwischen dem hier nicht dargestellten zweiten Anschlag 22 und den Wälzkörpern 4 angeordnet ist. Diese zusätzliche zweite Feder 20 dient als Puffer beim Lösen der Feststellbremse. Dieses zweite Federelement 20 kommt dann zum Einsatz, wenn vor der Betätigung der Feststellbremse ein hoher hydraulischer Bremsdruck in den Betriebsdruckraum 6 eingesteuert wurde. In diesem Falle ist der Weg zum Abrollen der Kugeln 4 beim Lösen der Feststellbremse größer als bei der Betätigung der Feststellbremse und das zweite Federelement 20 hält als Puffer einen Abrollweg für die Kugeln 4 vor.

Beide in den Fig. 3 und 4 dargestellten Ausführungen weisen eine Gewindespindel 2 auf, deren Steigung zwischen 3mm bis 5mm pro Umdrehung beträgt. Die Gewindemutter 3 weist vorzugsweise 2 bis 5 Gewindegänge auf.

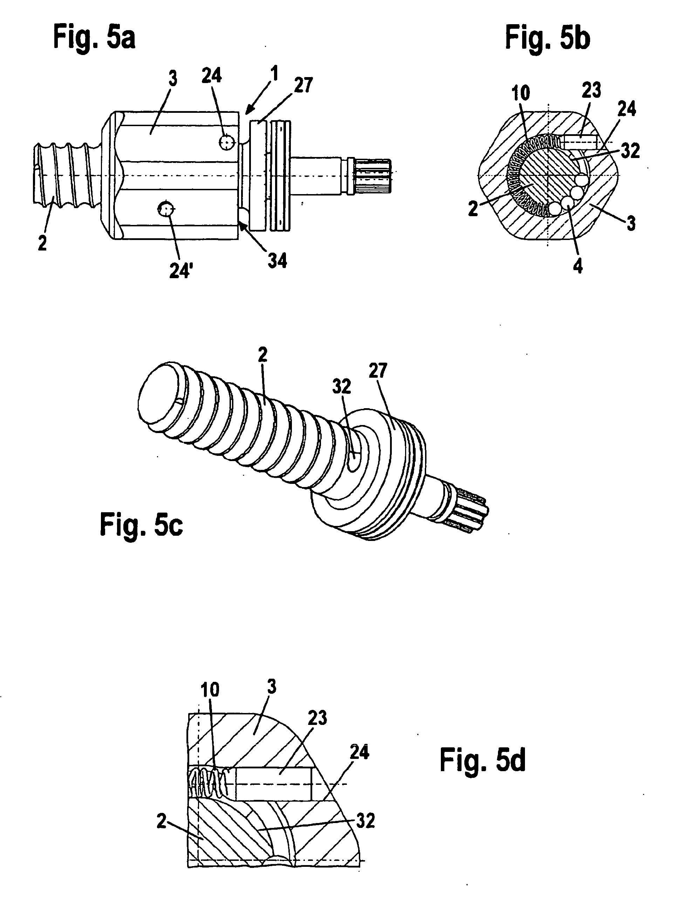

Die Fig. 5a bis 5d zeigen ein Ausführungsbeispiel der Anschläge 21, 22 aus den Fig. 3 und 4. Wie die beiden Schnittdarstellungen in Fig. 5b und 5d verdeutlichen, werden die Anschläge 21, 22 durch Stifte 23 gebildet, die in Bohrungen 24, 24'in der Gewindemutter 3 eingepresst sind. Diese Bohrungen 24, 24' in der Gewindemutter 3 enden jeweils in einem Gewindegang der Gewindemutter 3 und die in die Bohrungen 24, 24' eingepressten Stifte 23 ragen in den Gewindegang zwischen Gewindemutter 3 und Spindel 2. Wie insbesondere in Fig. 5b und 5d dargestellt stützt sich das erste Federelement 10 am Stift 23 ab und ist zwischen den Kugeln 4 und dem den Anschlag 21 bildenden Stift 23 angeordnet. Gleiches gilt selbstverständlich auch für den zweiten Anschlag 22 und gegebenenfalls für das zweite Federelement 20.

Wie Fig. 5b und 5c zeigen, wirken die Stifte 23 nicht nur als Anschläge 21, 22 für die Federelemente 10, 20 bzw. die Kugeln 4 sondern gleichzeitig als Begrenzung der linearen Bewegung der Gewindemutter 3 auf der Spindel 2: Der Gewindegang der Spindel 2 weist in Richtung des Kragens 27 eine Auslauffläche 32 auf, die mit dem Stift 23 zusammenwirkt. Die Auslauffläche 32 ist eine kontinuierliche Verringerung der Nut, die den Gewindegang bildet. Dadurch fehlt der Raum, den der in den Gewindegang ragende Stift 23 benötigt und der Stift 23 schlägt gegen die Auslauffläche 32. Der Stift 23, die Auslauffläche 32 und der Kragen 27 der Gewindespindel 2 sind dabei so zueinander positioniert, dass der Kragen 27 der Gewindespindel 2 nicht mit der Außenfläche 34 der Gewindemutter 3 in Kontakt kommt. Durch diese Maßnahme wird ein Verklemmen der Gewindemutter 3 am Kragen 27 bzw. an der Spindel 2 verhindert. Eine zweite Auslauffläche am anderen Ende der Gewindespindel 2, also an dem dem Kragen 27 abgewandten Ende der Gewindespindel 2 ist ebenfalls vorgesehen, jedoch in den Fig. 5a bis 5d nicht dargestellt.

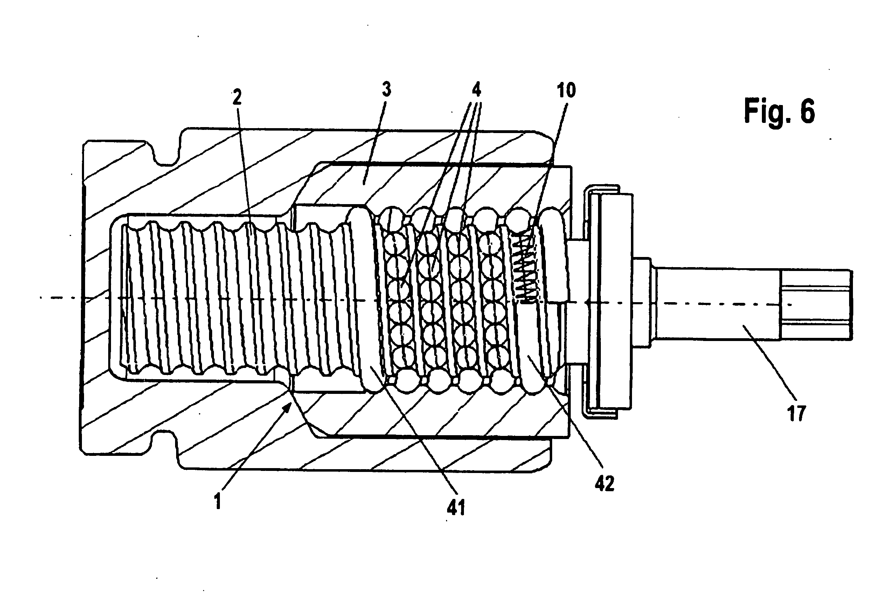

Bei der in Fig. 6 dargestellten alternativen Ausführungsform werden die Anschläge 21, 22 durch zwei spiralsegmentförmig Verschlusselemente 41, 42 gebildet, deren Durchmesser vor der Montage in den Gewindegang zwischen Gewindemutter 3 und Spindel 2 größer als der Durchmesser des Gewindeganges ist. Die spiralsegmentförmigen Verschlusselemente 41, 42 haben die Form eines aufgeschnittenen Torus und sind aus einem elastischen Material hergestellt, das heißt, sie können durch eine elastische Verformung komprimiert werden. Bei der Montage der Verschlusselemente 41, 42 in den Gewindegang werden die Verschlusselemente 41, 42 komprimiert und infolge der elastischen Verformung sind die Verschlusselemente 41, 42 nach der erfolgten Montage kraftschlüssig in der Gewindemutter 3 positioniert. Die Verschlusselemente 41, 42 stützen sich somit kraftschlüssig mit ihrem Außenumfang an der Gewindemutter 3 ab und weisen gleichzeitige keinen Berührungspunkt zur Spindel 2 auf, damit sich diese weiterhin ohne Reibungsverluste drehen kann. Das in der Zeichnung rechte Verschlusselement 42 dient wiederum als Anschlag 21 für das erste Federelement 10. Ein gegebenenfalls vorgesehenes zweites Federelement 20 ist dann zwischen dem in der Zeichnung links dargestellten Verschlusselement 41 und den Wälzkörpern 4 angeordnet.

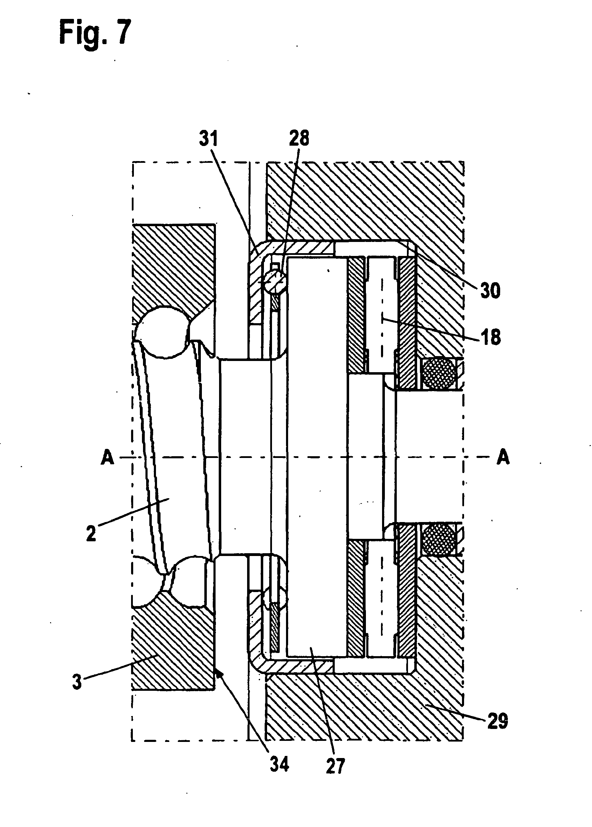

In Fig. 7 ist ein vergrößerter Ausschnitt aus Fig. 1 dargestellt und zeigt, wie das Getriebe 1 in die Fahrzeugbremse integriert wird. Der Kragen 27 der Gewindespindel 2 wird von einer Stufenbohrung 30 im Bremsgehäuse 29 aufgenommen und stützt sich über ein erstes Axiallager 18 am Bremsgehäuse 29 ab. Ein zweites Axiallager 28 ist zwischen dem Kragen 27 der Gewindespindel 2 und einem mit dem Bremsgehäuse 29 verbundenen Topf 31 angeordnet. Dieser in die Stufenbohrung 30 des Bremsgehäuses 29 eingepresste Topf 31 mit dem zweiten Axiallager 28 hat zwei Funktionen. Einerseits wird eine Bewegung der Gewindespindel 2 entlang der Kolbenlängsachse A unterdrückt, das heißt, die Spindel 2 kann nicht aus ihrer in Fig. 7 dargestellten Position herausgezogen werden und andererseits dient die Anordnung als Anschlag und Verklemmschutz der Gewindemutter 3 wie nachfolgend noch näher erläutert wird: Sobald die Gewindemutter 3 beim Lösen der Feststellbremse eine Rückbewegung in Richtung des Kragens 27 der Spindel 2 vollzieht, wird die Gewindemutter 3 mit Ihrer Außenfläche 34 auf dem Topf 31 aufsetzen. Dabei übt die Spindel 2 eine axiale Kraft auf das zweite Axiallager 28 aus. Die Spindel 2 kann jedoch nicht aus der Stufenbohrung 30 herausgezogen werden, wie bereits erwähnt wurde. Gleichzeitig kann es aber auch nicht zu einer Verklemmung zwischen Gewindemutter 3 und Topf 31 kommen, da das Rollwiderstandsmoment des zweiten Axiallagers 28 entsprechend klein ist.

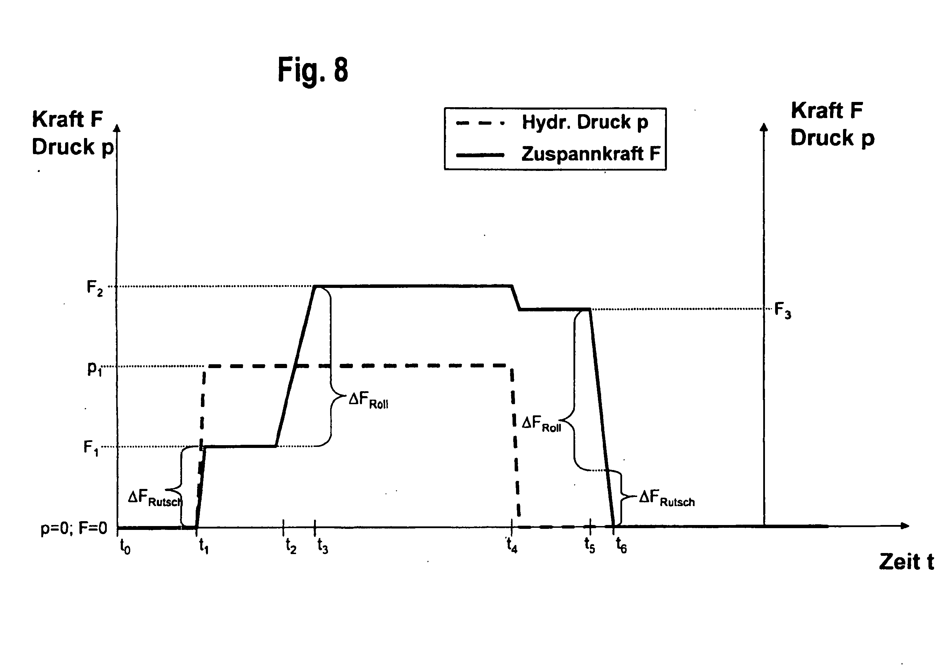

Ein zeitliches Ablaufdiagramm beim Zuspannen und Lösen der Feststellbremse ist in Fig. 8 dargestellt. Der in den hydraulischen Betriebsdruckraum 6 eingesteuerte hydraulische Druck p ist mit einer gestrichelten Linie dargestellt während die mittels elektromechanischem Aktuator 7 und Getriebe 1 erzeugte Zuspannkraft F mit einer durchgezogenen Linie dargestellt ist. Auf der Ordinate sind dementsprechend hydraulischer Druck p und elektromechanische Zuspannkraft F abgetragen. Zum Zeitpunkt t₀ ist kein hydraulisches Druckmittel in den Betriebsdruckraum 6 eingesteuert und die Feststellbremse-befindet sich im unbetätigten Zustand. Zum Zeitpunkt t₁ wird der hydraulische Druck p₁ in den Betriebsdruckraum eingesteuert. Die nahezu gleichzeitig auftretende Zuspannkraft F₁ entspricht dem lastfreien Rutschen der Kugeln 4 und die Erhöhung der Zuspannkraft ΔF_{Rutsch} resultiert aus dem hydraulischen Vordruck. Zum Zeitpunkt t₂ beginnt die eigentliche elektromechanische Betätigung. Bis zum Zeitpunkt t₃ rollen die Wälzkörper 4 ab bis eine Zuspannkraft F₂ der Feststellbremse erreicht ist. Die dabei erzeugte zusätzliche Zuspannkraft ΔF_{Roll} entspricht proportional dem Abrollweg der Wälzkörper 4. Die Zuspannkraft F₂ der Feststellbremse setzt sich somit aus der dem hydraulischen Vordruck im Betriebsdruckraum 6 entsprechenden Zuspannkraft ΔF_{Rutsch} und der überlagerten elektro-mechanischen Betätigung ΔF_{Roll} zusammen. Unmittelbar nach der Beendigung der hydraulischen Druckeinsteuerung in den Betriebsdruckraum zum Zeitpunkt t₄ reduziert sich der hydraulische Druck auf p=0 und die Zuspannkraft der Feststellbremse sinkt leicht auf den Wert F₃. Die Feststellbremse hält das Kraftfahrzeug mit der Zuspannkraft F₃.

Ein Lösen der Feststellbremse zum Zeitpunkt t₅ stellt eine Betätigung des Getriebes 1 unter Last dar und führt zu einem Abrollen der Kugeln 4 und einer Reduzierung der Zuspannkraft um einen Kraftbetrag ΔF_{Roll}, der dem Abrollen der Kugeln 4 entspricht. Beim Abrollen wird das Federelement 10 komprimiert haben und es steht kein weiterer Pufferweg zum weiteren Abrollen der Wälzkörper 4 mehr zur Verfügung. Um die Feststellbremse vollständig zu Lösen ist die Reduzierung der Feststellkraft um einen weiteren Kraftbetrag ΔF_{Rutsch} notwendig, der dem Rutschen der Kugeln 4 entspricht. Da dies bereist auf einem geringen Kraftniveau geschieht, können die Kugeln 4 rutschen. Bei der zweiten Ausführung nach Fig. 4 findet stattdessen eine Kompression des zweiten Federelements 20 und ein weiteres Abrollen der Kugeln 4 statt. Zum Zeitpunkt t₆ ist die Zuspannkraft F auf Null reduziert und das Kraftfahrzeug kann ungebremst bewegt werden.

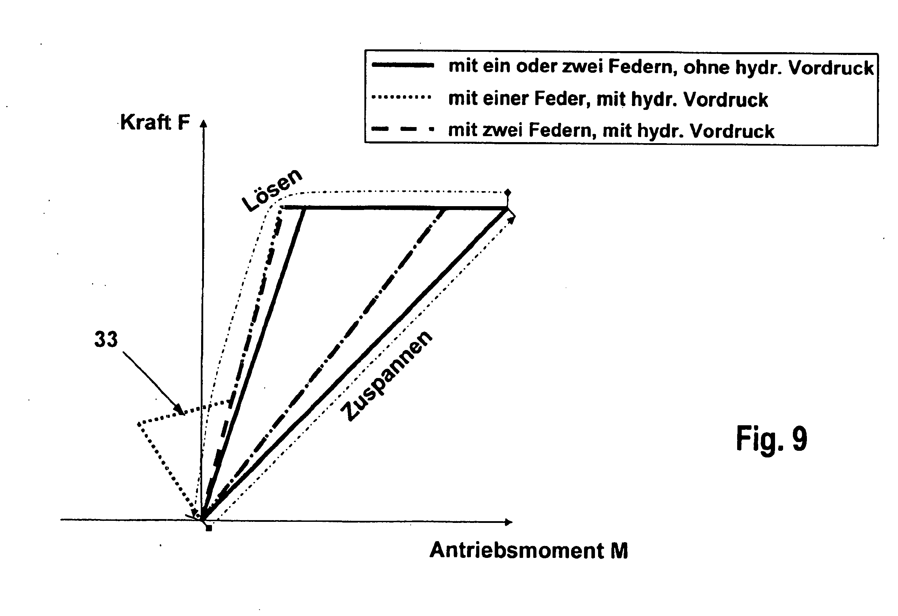

In Fig. 9 ist ein Diagramm dargestellt, bei dem die Zuspannkraft F auf der Ordinate und das resultierende Antriebsmoment M des Getriebes 1 auf der Abszisse abgetragen sind. Die Kurve mit der durchgezogenen Linie beschreibt dabei das Verhalten eines Getriebes 1 mit einem oder zwei Federelementen 10, 20 ohne Einsteuerung eines hydraulischen Drucks in den Betriebsdruckraum 6. Die gepunktete Linie zeigt das Verhalten eines Getriebes 1 nach Fig. 3, das lediglich ein Federelement 10 aufweist, bei Einsteuerung eines hydraulischen Drucks in den Betriebsdruckraum 6 vor dem Zuspannen der Feststellbremse und einem hydraulischen Druckabbau vor dem Lösen der Feststellbremse, wie es anhand von Fig. 8 beschrieben wurde. Dabei ist erkennbar, dass beim Lösen der Feststellbremse ein negatives Moment auftritt, das mit dem Bezugszeichen 33 versehen ist. Dieses negative Moment 33 entsteht beim Lösen der Feststellbremse durch das Rutschen der Wälzkörper 4, wenn diese zuvor bereits abgerollt sind, das Federelement 10 komprimiert haben und kein weiterer Pufferweg zum weiteren Abrollen der Wälzkörper 4 mehr zur Verfügung steht. Dieses negative Moment 33 entsteht zwischen den Zeitpunkten t₅ und t₆ aus Fig. 8 und wird durch das zweite Federelement 20 vermieden, wie die gestrichelte Linie darstellt.

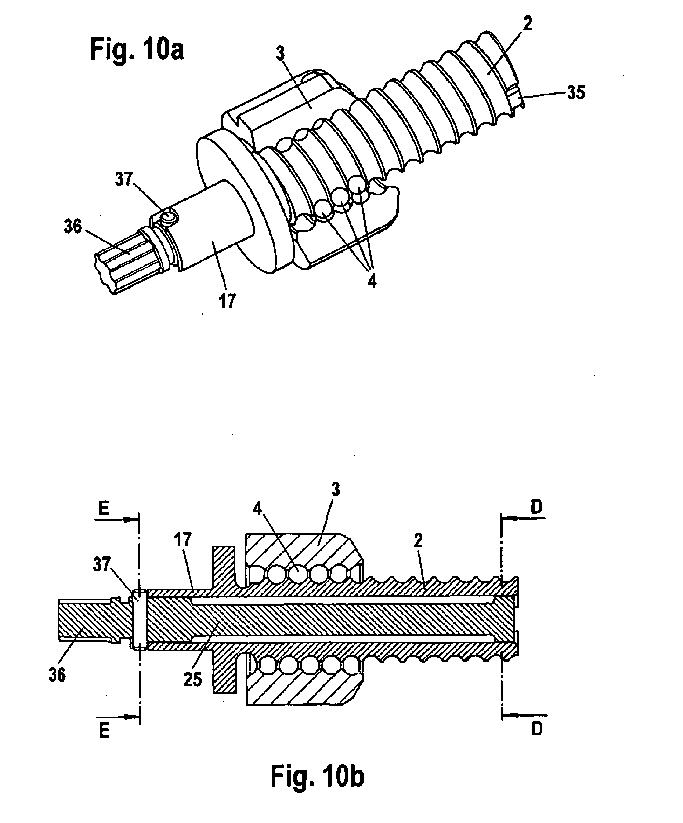

Eine weitere Ausführungsform des Getriebes 1 ist in Fig.10a und 10b dargestellt und weist einen mechanischen Energiespeicher 19 auf, der beim Betätigen der Gewindespindel 2 ladbar ist. Dieser mechanische Energiespeicher 19 ist durch einen Drehstab 25 gebildet, der von einer axialen Bohrung in der Gewindespindel 2 aufgenommen ist. Die Gewindespindel 2 ist also hohl ausgeführt, um den Drehstab 25 aufzunehmen. Der Drehstab 25 ist an dem dem Schaft abgewandten Ende der Gewindespindel 2 form- oder kraftschlüssig mit der Gewindespindel 2 verbunden. Zu diesem Zweck weist der Drehstab 25 an diesem Ende eine Querverdickung 35 auf, mit der der Drehstab 25 formschlüssig in der Spindel 2 befestigt ist. Das andere Ende ist mit einer Aufnahme 36 für das eingangsseitege Drehmoment ausgestattet und wird mit einem Stift 37 mit dem Schaft 17 der Spindel 2 formschlüssig verbunden. Der Stift 37 dient gleichzeitig dazu, den vorgespannten Drehstab 25 zu fixieren. Zusätzlich wird durch die Form der Nut in der Spindel 2 ein genau definierter Verdrehweg realisiert.

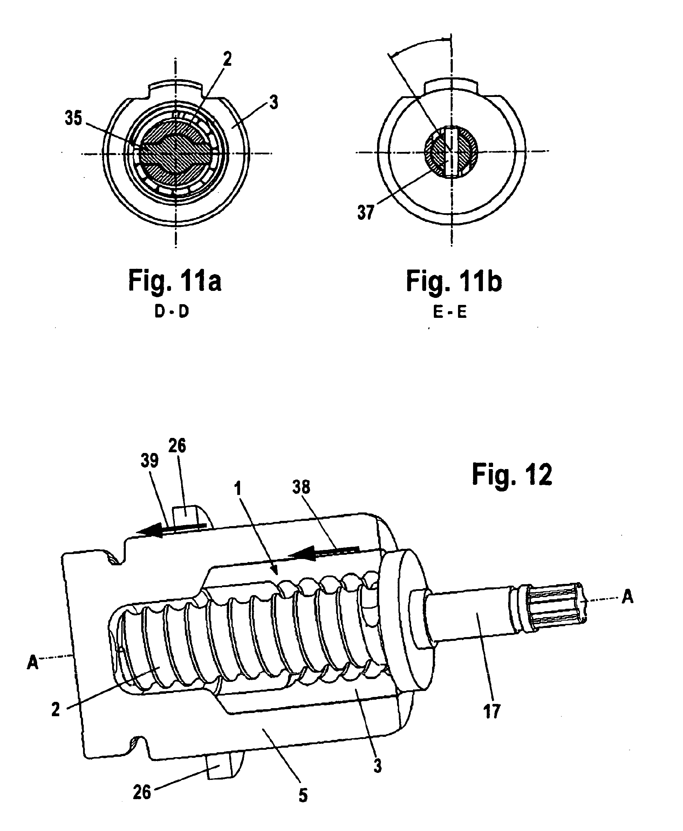

In Fig. 11a und 11b sind die Querschnitte D-D und E-E aus Fig. 10b dargestellt. Dabei ist also in Fig. 11a dargestellt, wie die Querverdickung 35 des Drehstabes 25 mit der Spindel 2 formschlüssig verbunden ist. Durch die genaue Definition des Drehwinkels an der Spindel 2 ist eine sehr genaue und reproduzierbare Einstellung der Momente realisierbar. Je nach Anforderung kann der Querschnitt des Drehstabes 25 rund oder rechteckig sein.

Der Drehstab 25 ist zur Aufrechterhaltung der eingestellten Zuspannkraft vorgesehen. Der Drehstab 25 wird dabei im Momentenfluss angeordnet und wirkt auf die Spindel 2. Er ist bei einer Drehung der Spindel 2 spannbar bzw. ladbar und kompensiert thermische Schrumpfeffekte. Dadurch wird erreicht, dass die auf die Bremsbeläge einwirkende Zuspannkraft von thermisch bedingten Längenänderungen im Bereich des Bremssattels nahezu unabhängig ist.

Wie in Fig. 12 dargestellt ist, ist die Gewindemutter 3 des Getriebes 1 derart in den Bremskolben 5 eingepasst, dass eine Relativbewegung zwischen Gewindemutter 3 und Bremskolben 5 eine Reibkraft erzeugt, die in Fig. 12 mit dem Kraftpfeil 38 angedeutet ist. Außerdem ist der bereits im Zusammenhang mit Fig. 1 erwähnte Dichtring 26 zwischen Bremskolben 5 und Bremsgehäuse 29 derart ausgebildet, dass bei einer Relativbewegung zwischen Bremskolben 5 und Bremsgehäuse 29 eine weitere Reibkraft erzeugt, die mit dem Kraftpfeil 39 dargestellt ist. Beim Betätigen des Getriebes 1 zur Erzielung einer Zuspannkraft stützt sich die Gewindemutter 3 formschlüssig am Bremskolben 5 ab und bewegt sich entlang der Kolbenlängsachse in der Zeichnung nach links, bis es zum Kontakt an der Stirnfläche zwischen Gewindemutter und Bremskolben kommt. Eine Zuspannkraft wird aufgebaut.

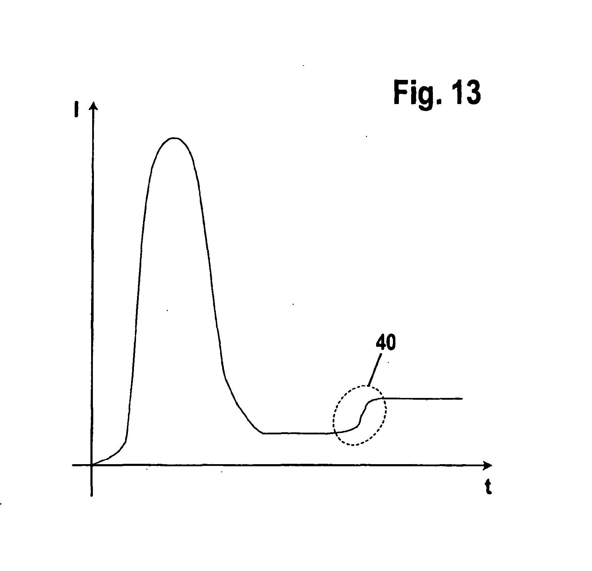

Beim Lösen wird nach dem Abbau der Zuspannkraft entweder die Gewindemutter 3 aus dem Bremskolben 5 herausgezogen oder der Bremskolben in das hier nicht dargestellte Bremsgehäuse 29 zurückgezogen. Dabei wird entweder gegen die Reibkraft zwischen Gewindemutter 3 und Bremskolben 5 oder gegen die Reibkraft des Dichtringes 26 Arbeit geleistet. Diese Arbeit entgegen der Reibkräfte ist in der in Fig. 13 dargestellten Stromaufnahme erkennbar. Die in Fig. 13 dargestellte Stromaufnahme beim Lösen der Feststellbremse weist zunächst ein Minimum auf, bevor die eben erwähnte Arbeit entgegen der Reibkräfte zu einem erneuten Stromanstieg, der mit dem Bezugszeichen 40 versehen ist, führt. Dieser Stromanstieg 40 wird als Stromabschaltsignal benutzt, das heißt der Stromanstieg 40 ist das Signal den elektromechanischen Aktuator 7 abzuschalten, da die Feststellbremse vollständig gelöst ist. Als Vorteile der vorliegenden Erfindung ist der hohe Gesamtwirkungsgrad der Getriebeanordnung und die damit verbundene geringere elektrische Leistungsaufnahme anzusehen. Ein geringeres Laufgeräusch wird durch die Verwendung von geräuschoptimierten, in Gummidämpfern gelagerten Schneckengetrieben 11, 12 erreicht und durch die Integration eines mechanischen Energiespeichers ist kein Nachspannen der thermisch belasteten Bremse während des Abkühlens notwendig.

### Bezugszeichenliste

- 1: Getriebe
- 2: Spindel bzw. Gewindespindel
- 3: Gewindemutter
- 4: Wälzkörper bzw. Kugeln
- 5: Bremskolben
- 6: hydraulischer Betriebsdruckraum
- 7: elektromechanischer Aktuator
- 8: Ausgangswelle
- 9: Bremszylinder
- 10: erstes Federelement
- 11: erstes Schneckengetriebe
- 12: zweites Schneckengetriebe
- 13: erste Schnecke
- 14: erstes Schneckenrad
- 15: zweite Schnecke
- 16: zweites Schneckenrad
- 17: Schaft
- 18: erstes Axiallager
- 19: Energiespeicher
- 20: zweites Federelement
- 21: erster Anschlag
- 22: zweiter Anschlag
- 23: Stifte
- 24, 24': Bohrungen
- 25: Drehstab
- 26: Dichtring
- 27: Kragen
- 28: zweites Axiallager
- 29: Bremsgehäuse
- 30: Stufenbohrung
- 31: Topf
- 32: Auslauffläche
- 33: negatives Moment
- 34: Außenfläche Gewindemutter
- 35: Querverdickung
- 36: Aufnahme
- 37: Stift
- 38: Kraftpfeil
- 39: Kraftpfeil
- 40: Stromanstieg
- 41: Verschlusselement
- 42: Verschlusselement

## Patentansprüche

1. Kombinierte Fahrzeugbremse, die eine hydraulisch betätigbare Betriebsbremse und eine elektromechanisch betätigbare Feststellbremsvorrichtung aufweist, wobei in einem Bremsgehäuse (29) ein hydraulischer Betriebsdruckraum (6) von einem Bremskolben (5) begrenzt ist, der zur Durchführung von Betriebsbremsungen mit hydraulischem Druckmittel beaufschlagbar ist, so dass der Bremskolben (5) zur Erzielung einer Bremswirkung entlang einer Kolbenlängsachse (A) betätigbar ist, und wobei die Feststellbremsvorrichtung auf den Bremskolben (5) mittels eines Getriebes (1) wirkt, indem das Getriebe (1) die Rotationsbewegung eines elektromechanischen Aktuators (7) in eine Translationsbewegung umsetzt und eine Betätigung des Bremskolbens (5) zur Durchführung von Feststellbremsvorgängen bewirkt und in der betätigten Stellung hält, wobei das Getriebe (1) eine Gewindespindel (2) und eine Gewindemutter (3) aufweist, die über mehrere Wälzkörper (4) miteinander in Kontakt stehen, **dadurch gekennzeichnet, dass** die Wälzkörper (4) zwischen zwei Anschlägen (21, 22) im Gewindegang begrenzt beweglich angeordnet sind, wobei ein Federelement (10) zwischen den Wälzkörpern (4) und einem Anschlag (21) angeordnet ist und bei einem lastfreien Betätigen des Getriebes (1) ein Rutschen der Wälzkörper (4) ermöglicht und bei einem Betätigen des Getriebes (1) unter Last ein Abrollen der Wälzkörper (4) ermöglicht, und wobei zwischen dem elektromechanischen Aktuator (7) und der Gewindespindel (2) ein zweistufiges Untersetzungsgetriebe zwischengeschaltet ist, wobei eine Stufe des Untersetzungsgetriebes selbsthemmend ausgeführt ist.

2. Kombinierte Fahrzeugbremse nach Anspruch 1, **dadurch gekennzeichnet, dass** ein zweites Federelement (20) vorgesehen ist, das zwischen den Wälzkörpern (4) und dem anderen Anschlag (22) angeordnet ist.

3. Kombinierte Fahrzeugbremse nach Anspruch 1 oder 2, **dadurch gekennzeichnet, dass** die Anschläge (21, 22) kraftschlüssig mit der Gewindemutter (3) verbunden sind oder einteilig mit der Gewindemutter (3) ausgebildet sind.

4. Kombinierte Fahrzeugbremse nach Anspruch 3, **dadurch gekennzeichnet, dass** die Anschläge (21, 22) durch Stifte (23) gebildet werden, die sich an der Gewindemutter (3) abstützen.

5. Kombinierte Fahrzeugbremse nach Anspruch 4, **dadurch gekennzeichnet, dass** die Stifte (23) in Bohrungen (24, 24') in der Gewindemutter (3) eingepresst sind und in den Gewindegang der Gewindemutter (3) ragen.

6. Kombinierte Fahrzeugbremse nach Anspruch 3, **dadurch gekennzeichnet, dass** die Anschläge (21, 22) durch zwei spiralsegmentförmig Verschlusselemente (41, 42) gebildet werden, deren Durchmesser vor der Montage größer als der Durchmesser des Gewindeganges ist und die nach erfolgter Montage infolge einer elastischen Verformung kraftschlüssig in der Gewindemutter (3) positioniert sind.

7. Kombinierte Fahrzeugbremse nach einem der vorhergehenden Ansprüche, **dadurch gekennzeichnet, dass** ein mechanischer Energiespeicher (19) vorgesehen ist, der beim Betätigen der Gewindespindel (2) ladbar ist.

8. Kombinierte Fahrzeugbremse nach Anspruch 7, **dadurch gekennzeichnet, dass** der mechanische Energiespeicher (19) durch einen Drehstab (25) gebildet ist, der von einer axialen Bohrung der Gewindespindel (2) aufgenommen ist und an einem dem Antrieb abgewandten Ende der Gewindespindel (2) form- und/oder kraftschlüssig mit der Gewindespindel (2) verbunden ist.

9. Kombinierte Fahrzeugbremse nach Anspruch 8, **dadurch gekennzeichnet, dass** der Querschnitt des Drehstabes (25) rund oder rechteckig ist.

10. Kombinierte Fahrzeugbremse nach Anspruch 9, **dadurch gekennzeichnet, dass** ein Kragen (27) der Gewindespindel (2) von einer Stufenbohrung (30) im Bremsgehäuse (29) aufgenommen wird und über ein erstes Axiallager (18)am Bremsgehäuse (29) abstützt, während ein zweites Axiallager (28) zwischen dem Kragen (27) und einem mit dem Bremsgehäuse (29) verbundenen Topf (31) angeordnet ist und eine Bewegung der Gewindespindel (2) entlang der Kolbenlängsachse (A) unterdrückt.

11. Kombinierte Fahrzeugbremse nach Anspruch 10, **dadurch gekennzeichnet, dass** der Topf (31) in die Stufenbohrung (30) des Bremsgehäuses (29) eingepresst ist.

12. Kombinierte Fahrzeugbremse nach Anspruch 10 oder 11, **dadurch gekennzeichnet, dass** der Topf (31) einen Anschlag für die Gewindemutter (3) bildet.

13. Kombinierte Fahrzeugbremse nach einem der vorhergehenden Ansprüche, **dadurch gekennzeichnet, dass** die Gewindemutter (3) derart in den Bremskolben (5) eingepasst ist, dass eine Relativbewegung zwischen Gewindemutter (3) und Bremskolben (5) eine Reibkraft erzeugt.

14. Kombinierte Fahrzeugbremse nach einem der vorhergehenden Ansprüche, **dadurch gekennzeichnet, dass** ein Dichtring (26) zwischen Bremskolben (5) und Bremsgehäuse (29) vorgesehen ist, der bei einer Relativbewegung zwischen Bremskolben (5) und Bremsgehäuse (29) eine Reibkraft erzeugt.

15. Getriebe (1) zur Umsetzung einer Rotationsbewegung in eine Translationsbewegung mit einer Gewindespindel (2) und einer Gewindemutter (3), die über mehrere Wälzkörper (4) miteinander in Kontakt stehen, dass die Wälzkörper (4) zwischen zwei Anschlägen (21, 22) im Gewindegang begrenzt beweglich angeordnet sind, wobei ein Federelement (10) zwischen den Wälzkörpern (4) und einem Anschlag (21) angeordnet ist und bei einem lastfreien Betätigen des Getriebes (1) ein Rutschen der Wälzkörper (4) ermöglicht und bei einem Betätigen des Getriebes (1) unter Last ein Abrollen der Wälzkörper (4) ermöglicht, **dadurch gekennzeichnet, dass** ein zweites Federelement (20) vorgesehen ist, das zwischen den Wälzkörpern (4) und dem anderen Anschlag (22) angeordnet ist.

16. Getriebe (1) nach Anspruch 15, **dadurch gekennzeichnet, dass** die Anschläge (21, 22) kraftschlüssig mit der Gewindemutter (3) verbunden sind oder einteilig mit der Gewindemutter (3) ausgebildet sind.

17. Getriebe (1) nach Anspruch 15 oder 16, **dadurch gekennzeichnet, dass** die Anschläge (21, 22) durch Stifte (23) gebildet werden, die sich an der Gewindemutter (3) abstützen und dass die Stifte (23) in Bohrungen (24, 24') in der Gewindemutter (3) eingepresst sind und in den Gewindegang der Gewindemutter (3) ragen.

18. Getriebe (1) nach einem der Ansprüche 15 oder 16, **dadurch gekennzeichnet, dass** die Anschläge (21, 22) durch zwei spiralsegmentförmig Verschlusselemente (41, 42) gebildet werden, deren Durchmesser vor der Montage größer als der Durchmesser des Gewindeganges ist und die nach erfolgter Montage infolge einer elastischen Verformung kraftschlüssig in der Gewindemutter (3) positioniert sind.

19. Getriebe (1) nach einem der Ansprüche 15 bis 18, **dadurch gekennzeichnet, dass** ein mechanischer Energiespeicher (19) vorgesehen ist, der beim Betätigen der Gewindespindel (2) ladbar ist

20. Getriebe (1) nach Anspruch 19, **dadurch gekennzeichnet, dass** der mechanische Energiespeicher (19) durch einen Drehstab (25) gebildet ist, der von einer axialen Bohrung der Gewindespindel (2) aufgenommen ist und an einem dem Antrieb abgewandten Ende der Gewindespindel (2) form- und/oder kraftschlüssig mit der Gewindespindel (2) verbunden ist.

## Claims

1. Combined vehicle brake, which comprises a hydraulically actuated service brake and an electromechanically actuated parking brake device, a hydraulic operating pressure chamber (6) in a brake housing (29) being defined by a brake piston (5), which for performing service braking actions can be acted upon by hydraulic pressure fluid, so that the brake piston (5) can be actuated along a piston longitudinal axis (A) in order to produce a braking action, and the parking brake device acting on the brake piston (5) by means of a transmission (1), in that the transmission (1) translates the rotary motion of an electromechanical actuator (7) into a translational motion and actuates the brake piston (5) in order to perform parking brake actions and to keep it in the actuated position, the transmission (1) comprising a screw spindle (2) and a spindle nut (3), which are in contact with one another by way of multiple rolling elements (4), **characterized in that** the rolling elements (4) are arranged so that they can move to a limited extent between two stops (21, 22) in the thread, a spring element (10) being arranged between the rolling elements (4) and a stop (21) and allowing the rolling elements (4) to slide in no-load actuation of the transmission (1) and allowing the rolling elements (4) to roll when the transmission (1) is actuated under load, and a two-stage reduction gear being interposed between the electromechanical actuator (7) and the screw spindle (2), one stage of the reduction gear being of self-locking design.

2. Combined vehicle brake according to Claim 1, **characterized in that** a second spring element (20) is provided, which is arranged between the rolling elements (4) and the other stop (22).

3. Combined vehicle brake according to Claim 1 or 2, **characterized in that** the stops (21, 22) are frictionally coupled to the spindle nut (3) or are integrally formed with the spindle nut (3).

4. Combined vehicle brake according to Claim 3, **characterized in that** the stops (21, 22) are formed by pins (23), which are braced against the spindle nut (3).

5. Combined vehicle brake according to Claim 4, **characterized in that** the pins (23) are pressed into bores (24, 24') in the spindle nut (3) and project into the thread of the spindle nut (3).

6. Combined vehicle brake according to Claim 3, **characterized in that** the stops (21, 22) are formed by two helical segment-shaped locking elements (41, 42), the diameter of which before fitting is greater than the diameter of the thread and which after fitting are frictionally positioned in the spindle nut (3) due to an elastic deformation.

7. Combined vehicle brake according to one of the preceding claims, **characterized in that** a mechanical energy storage device (19) is provided, which can be loaded during actuation of the screw spindle (2).

8. Combined vehicle brake according to Claim 7, **characterized in that** the mechanical energy storage device (19) is formed by a torsion bar (25), which is received by an axial bore in the screw spindle (2) and is positively connected or frictionally coupled to the screw spindle (2) at an end of the screw spindle (2) remote from the drive.

9. Combined vehicle brake according to Claim 8, **characterized in that** the cross section of the torsion bar (25) is circular or rectangular.

10. Combined vehicle brake according to Claim 9, **characterized in that** a flange (27) of the screw spindle (2) is received by a stepped bore (30) in the brake housing (29) and supported by a first axial bearing (18) on the brake housing (29), whilst a second axial bearing (28) is arranged between the flange (27) and a canister (31) connected to the brake housing (29), and suppresses any movement of the screw spindle (2) along the longitudinal axis (A) of the piston.

11. Combined vehicle brake according to Claim 10, **characterized in that** the canister (31) is pressed into the stepped bore (30) in the brake housing (29).

12. Combined vehicle brake according to Claim 10 or 11, **characterized in that** the canister (31) forms a stop for the spindle nut (3).

13. Combined vehicle brake according to one of the preceding claims, **characterized in that** the spindle nut (3) is fitted into the brake piston (5) in such a way that a relative movement between the spindle nut (3) and the brake piston (5) generates a frictional force.

14. Combined vehicle brake according to one of the preceding claims, **characterized in that** a sealing ring (26) is provided between the brake piston (5) and the brake housing (29) and generates a frictional force in the event of a relative movement between the brake piston (5) and the brake housing (29).

15. Transmission (1) for translating a rotary motion into a translational motion by means of a screw spindle (2) and a spindle nut (3), which are in contact with one another by way of multiple rolling elements (4), the rolling elements (4) being arranged so that they can move to a limited extent between two stops (21, 22) in the thread, a spring element (10) being arranged between the rolling elements (4) and a stop (21) and allowing the rolling elements (4) to slide in no-load actuation of the transmission (1) and allowing the rolling elements (4) to roll when the transmission (1) is actuated under load, **characterized in that** a second spring element (20) is provided, which is arranged between the rolling elements (4) and the other stop (22).

16. Transmission (1) according to Claim 15, **characterized in that** the stops (21, 22) are frictionally coupled to the spindle nut (3) or are integrally formed with the spindle nut (3).

17. Transmission (1) according to Claim 15 or 16, **characterized in that** the stops (21, 22) are formed by pins (23), which are braced against the spindle nut (3) and that the pins (23) are pressed into bores (24, 24') in the spindle nut (3) and project into the thread of the spindle nut (3).

18. Transmission (1) according to either of Claims 15 and 16, **characterized in that** the stops (21, 22) are formed by two helical segment-shaped locking elements (41, 42), the diameter of which before fitting is greater than the diameter of the thread, and which after fitting are frictionally positioned in the spindle nut (3) due to an elastic deformation.

19. Transmission (1) according to one of Claims 15 to 18, **characterized in that** the a mechanical energy-storing device (19) is provided, which can be loaded during actuation of the screw spindle (2).

20. Transmission (1) according to Claim 19, **characterized in that** the mechanical energy storage device (19) takes the form of a torsion bar (25), which is received by an axial bore in the screw spindle (2) and is positively connected and/or frictionally coupled to the screw spindle (2) at an end of the screw spindle (2) remote from the drive.

## Revendications

1. Frein de véhicule mixte, qui présente un frein de service actionnable hydrauliquement et un dispositif de frein de stationnement actionnable électromécaniquement, dans lequel dans un logement de frein (29), une chambre de pression de service hydraulique (6) est délimitée par un piston de frein (5), qui peut être sollicité par un milieu pressurisé hydraulique afin de mettre en oeuvre les freinages de service, de telle sorte que le piston de frein (5) puisse être actionné afin d'obtenir un effet de freinage le long d'un axe longitudinal de piston (A), et dans lequel le dispositif de frein de stationnement agit sur le piston de frein (5) au moyen d'une transmission (1), en ce que la transmission (1) convertit le mouvement de rotation d'un actionneur électromécanique (7) en un mouvement de translation et provoque un actionnement du piston de frein (5) afin de mettre en oeuvre les processus de frein de stationnement et se maintient dans la position actionnée, dans lequel la transmission (1) présente une vis filetée (2) et un écrou fileté (3), qui sont en contact l'un avec l'autre par l'intermédiaire de plusieurs corps de roulement (4), **caractérisé en ce que** les corps de roulement (4) sont disposés de manière mobile limitée entre deux butées (21, 22) dans le pas de vis, dans lequel un élément de ressort (10) est disposé entre les corps de roulement (4) et une butée (21) et permet, lors d'un actionnement exempt de charge de la transmission (1), un dérapage des corps de roulement (4) et permet, lors d'un actionnement de la transmission (1) sous charge, un roulement des corps de roulement (4), et dans lequel entre l'actionneur électromécanique (7) et la vis filetée (2), un réducteur de vitesse à deux étages est intercalé, dans lequel un étage du réducteur de vitesse est réalisé de manière réversible.

2. Frein de véhicule mixte selon la revendication 1, **caractérisé en ce qu'**un deuxième élément de ressort (20) est prévu, qui est disposé entre les corps de roulement (4) et l'autre butée (22).

3. Frein de véhicule mixte selon la revendication 1 ou 2, **caractérisé en ce que** les butées (21, 22) sont reliées par conjonction de force à l'écrou fileté (3) ou sont réalisées d'un seul tenant avec l'écrou fileté (3).

4. Frein de véhicule mixte selon la revendication 3, **caractérisé en ce que** les butées (21, 22) sont formées par des goupilles (23), qui s'appuient sur l'écrou fileté (3).

5. Frein de véhicule mixte selon la revendication 4, **caractérisé en ce que** les goupilles (23) sont pressées dans des alésages (24, 24') dans l'écrou fileté (3) et font saillie dans le pas de vis de l'écrou fileté (3).

6. Frein de véhicule mixte selon la revendication 3, **caractérisé en ce que** les butées (21, 22) sont formées par deux éléments d'obturation (41, 42) en forme de segment spiralé, dont le diamètre avant le montage est plus grand que le diamètre du pas de vis, et qui sont positionnés dans l'écrou fileté (3) après un montage réussi par conjonction de force en conséquence d'une déformation élastique.

7. Frein de véhicule mixte selon une des revendications précédentes, **caractérisé en ce qu'**un accumulateur d'énergie mécanique (19) est prévu, lequel peut être chargé lors de l'actionnement de la vis filetée (2).

8. Frein de véhicule mixte selon la revendication 7, **caractérisé en ce que** l'accumulateur d'énergie mécanique (19) est formé par une barre de torsion (25), qui est reçue par un alésage axial de la vis filetée (2), et est relié à une extrémité de la vis filetée (2) qui se détourne de l'entraînement par conjonction de forme et/ou de force avec la vis filetée (2).

9. Frein de véhicule mixte selon la revendication 8, **caractérisé en ce que** la section transversale de la barre de torsion (25) est ronde ou rectangulaire.

10. Frein de véhicule mixte selon la revendication 9, **caractérisé en ce qu'**un collier (27) de la vis filetée (2) est reçu par un alésage à cran (30) dans le logement de frein (29) et s'appuie par l'intermédiaire d'un premier palier axial (18) sur le logement de frein (29), alors qu'un deuxième palier axial (28) est disposé entre le collier (27) et un pot (31) relié au logement de frein (29) et entrave un mouvement de la vis filetée (2) le long de l'axe longitudinal de piston (A).

11. Frein de véhicule mixte selon la revendication 10, **caractérisé en ce que** le pot (31) est pressé dans l'alésage à cran (30) du logement de frein (29).

12. Frein de véhicule mixte selon la revendication 10 ou 11, **caractérisé en ce que** le pot (31) forme une butée pour l'écrou fileté (3).

13. Frein de véhicule mixte selon une des revendications précédentes, **caractérisé en ce que** l'écrou fileté (3) est emboîté dans le piston de frein (5) de telle sorte qu'un mouvement relatif entre l'écrou fileté (3) et le piston de frein (5) génère une force de friction.

14. Frein de véhicule mixte selon une des revendications précédentes, **caractérisé en ce qu'**une bague d'étanchéité (26) est prévue entre le piston de frein (5) et le logement de frein (29), laquelle génère en présence d'un mouvement relatif entre le piston de frein (5) et le logement de frein (29) une force de friction.

15. Transmission (1) pour convertir un mouvement de rotation en un mouvement de translation avec une vis filetée (2) et un écrou fileté (3), qui sont en contact l'un avec l'autre par l'intermédiaire de plusieurs corps de roulement (4), les corps de roulement (4) étant disposés de manière mobile limitée entre deux butées (21, 22) dans le pas de vis, dans laquelle un élément de ressort (10) est disposé entre les corps de roulement (4) et une butée (21) et permet, lors d'un actionnement exempt de charge de la transmission (1), un dérapage des corps de roulement (4) et permet, lors d'un actionnement de la transmission (1) sous charge, un roulement des corps de roulement (4), **caractérisée en ce qu'**un deuxième élément de ressort (20) est prévu, lequel est disposé entre les corps de roulement (4) et l'autre butée (22).

16. Transmission (1) selon la revendication 15, **caractérisée en ce que** les butées (21, 22) sont reliées par conjonction de force à l'écrou fileté (3) et sont réalisées d'un seul tenant avec l'écrou fileté (3).

17. Transmission (1) selon la revendication 15 ou 16, **caractérisée en ce que** les butées (21,22) sont formées par des goupilles (23) qui s'appuient dans l'écrou fileté (3) et **en ce que** les goupilles (23) sont pressées dans des alésages (24, 24') dans l'écrou fileté (3) et font saillie dans le pas de vis de l'écrou fileté (3).

18. Transmission (1) selon une des revendications 15 ou 16, **caractérisée en ce que** les butées (21, 22) sont formées par deux éléments d'obturation (41, 42) en forme de segment spiralé, dont le diamètre avant le montage est plus grand que le diamètre du pas de vis et qui, après un montage réussi, sont positionnés par conjonction de force dans l'écrou fileté (3) en conséquence d'une déformation élastique.

19. Transmission (1) selon une des revendications 15 à 18, **caractérisée en ce qu'**un accumulateur d'énergie mécanique (19) est prévu, lequel peut être chargé lors de l'actionnement de la vis filetée (2).

20. Transmission (1) selon la revendication 19, **caractérisée en ce que** l'accumulateur d'énergie mécanique (19) est formé par une barre de torsion (25), qui est reçue par un alésage axial de la vis filetée (2), et est relié à une extrémité de la vis filetée (2) qui se détourne de l'entraînement par conjonction de forme et/ou de force à la vis filetée (2).
